# EUROPEAN PATENT SPECIFICATION

(11) **EP 1 970 666 B1**
(45) Date of publication and mention of the grant of the patent: **29.08.2012**
(21) Application number: 07300862.5
(22) Date of filing: 14.03.2007
(51) Int. Cl.: G01B 9/02

(54) **Interferometer**
Interferometer
Interféromètre

(43) Date of publication of application: 17.09.2008
(73) Proprietor: Thales Alenia Space Italia S.p.A., 00131 Roma (IT); Smith, Bradford Lee, F-75008 Paris (FR)
(72) Inventor: Cesare, Stefano, 10146, TORINO (IT); Marco, Pisani, 10146, TORINO (IT)
(74) Representative: Esselin, Sophie

(56) References cited:
- EP-A- 0 157 227
- DE-A1- 4 029 928
- DE-A1- 10 044 690
- US-A1- 2002 179 866
- US-A1- 2005 264 822

## Description

The present invention relates to an interferometer, and to a method of interferometry, for obtaining a measure of the distance to an object. In particular the invention relates to the measurement of the relative variation in distance between two bodies, which may be separated by a long distance (for example > 1 km), and to a heterodyne laser interferometer for the measurement of such relative variation in distance.

The invention has particular application in the measurement of relative displacement between satellites operating in a formation flying arrangement.

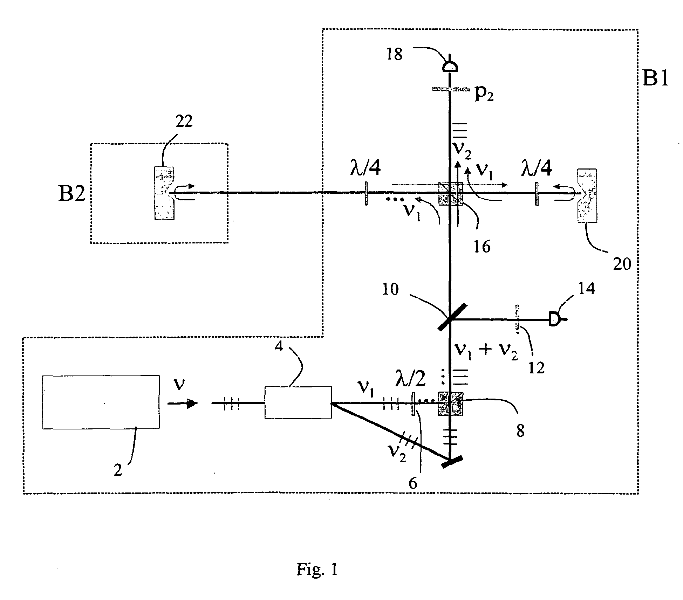

It is known to use a heterodyne laser interferometer to measure the distance between satellites. One example of a known heterodyne interferometer for measuring the displacement between two satellites (B1, B2) separated by a distance d is shown in Figure 1. The interferometer is fed by a laser beam which is the superposition of two sub-beams with frequencies ν₁, ν₂, and crossed linear polarisations. The laser beam is generated by a single frequency laser source 2 in combination with a frequency shifter 4 and polarising optics (half wave-plate 6, polarising beam-splitter 8), as shown in Figure 1. Another way to generate such a beam is to use a suitable two-frequency laser source.

In the example shown in Figure 1, a beam splitter (BS) 10 extracts a small portion of the two sub-beams and a polariser 12 selects the 45° components of the two sub-beams, which being parallel can eventually interfere. A reference detector 14 measures the power of the interference (reference) signal made up of the interfering 45° components of the two beams and having a frequency ν_{DR} = |ν₁-ν₂|, and a given phase which depends on the optical path followed separately by the two sub-beams from the frequency shifter 4 to the polarizing beam splitter 8.

The two sub-beams are then separated again by a further polarising beam-splitter (PBS 16). The sub-beam with frequency ν₂ (reference beam) is sent directly towards a detector 18. The sub-beam with frequency ν₁ (measurement beam) travels the path between retro-reflectors 20 22, placed respectively on the satellites B1 and B2, before it arrives at the detector 18 where it interferes with the reference beam. The interference signal at the detector 18 has again a frequency ν_{DM} = |ν₁-ν₂| and a phase proportional to the path difference between the reference beam and the measurement beam. When the path length between the retro-reflectors 20 22 changes the phase of the interference signal changes with respect to the phase of the reference beam and this changes according to the displacement between the two satellites. The phase of the interference signal at the detector 18, measured against the phase of the interference signal at the detector 14, provides information concerning any variation in distance between the two satellites.

Known heterodyne interferometers, such as that described above, which are used to measure high-resolution (at nanometer level) displacements between two satellites, suffer a major problem when the distance between the satellites becomes so large (as for instance, in the case of satellites flying at distances > ~1 km) that the power of the reflection of the measurement beam coming back from the satellite B2 is much smaller than the portion of the measurement beam leaking through the PBS 16 and reaching directly the detector 18.

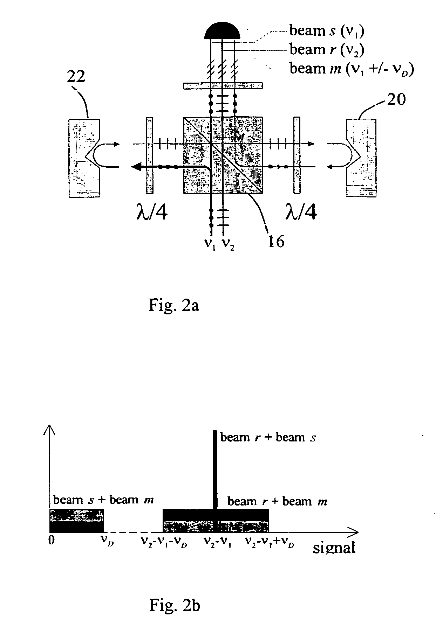

In fact, although in theory the PBS 16 should direct towards the retro-reflector 22 forming part of the second body M2 the totality of the sub-beam with frequency ν₁, in practice (because of physical limitations affecting all polarising beam-splitters) it allows a fraction of this beam to pass straight through to the detector 18. In a very good polarising beam-splitter the fraction of the beam thus allowed to pass through to the detector 18, without being directed to the retro-reflector 22, is around 1:1000. Thus the situation depicted in Figure 2 occurs at the detector 18. The fraction (s) of the measurement beam reaching directly the detector 18 without first passing to the second body B2 and being reflected back to the detector 18, is much larger than the fraction (m) of the measurement beam reaching the detector 18 after being reflected from the second body B2. The presence of this very large local beat note (a sinusoid with frequency |ν₁-ν₂| which doesn't carry any information about the inter-satellite distance variation) at the detector 18 arising from the fraction *s* of the measurement beam makes critical the extraction of the actual signal of the interferometer (the phase of the much smaller beat note between the reflected beam and the reference beam) without introducing distortions in its shape. In addition, the presence of the fraction (s) of the measurement beam reaching directly the detector 18 introduces a large amount of optical power to the detector 18, increases the shot noise and decreases consequently the signal-to-noise ratio.

In an alternative known heterodyne interferometer system for measuring the displacement of two satellites separated by a long distance an optical transponder technique is used. In such a system, a second laser is placed on the second satellite and is locked in phase to the laser beam received from the first satellite. The beam of the second laser is then sent back to the first satellite and superimposed on the reference beam at the detector (corresponding to the detector 18 of Figure 1), which is typically in the form of a photodiode. The power of the measurement beam at reaching the second satellite is effectively amplified before being sent back to the first satellite, rather than merely being reflected. Thus the power of the beam received by the detector at the first satellite is increased and, by setting the proper amplification, can exceed the power of the spurious beam leaking through the PBS. Such a system is particularly well suited to the situation where the satellite distance is very long (> 100-1000 km), but is also complex as it requires two lasers working simultaneously and locked in phase to each other. For distances < 100 km, an alternative, simpler system is desirable.

It is an aim of the present invention to provide an improved, or at least alternative, interferometer for measuring the distance to an object. In particular, it is an aim of the present invention to provide a heterodyne laser interferometer for measuring the relative displacement between two bodies separated by a long distance (for example > 1 km), or for example when the measurement laser beam sent from the first body to the second body and reflected or otherwise returned from the second body to the first body is weaker than the spurious fraction of the measurement laser beam leaking through a polarising beam splitter at the first body.

In a first aspect of the invention there is provided an interferometer for determining a measure of the distance to an object, comprising:- means for providing a measurement beam; means for directing at least a portion of the measurement beam towards the object; a receiver for receiving a response beam from the object in response to the at least a portion of the measurement beam and for passing the response beam to a detector to form part of an interference signal at the detector; and processing means for determining a measure of the distance to the object in dependence upon the interference signal, characterised in that the interferometer further comprises means for interrupting the measurement beam, and the control means as defined herebelow.

Preferably the measure of the distance is the relative variation in the distance to the object.

In the context of the present invention, interruption of a signal or beam means providing that for at least one portion of time, referred to as an interruption interval, a characteristic of the signal or beam is changed. The change in the characteristic of the signal may be a reduction of the amplitude. In the case where the measurement beam is an oscillating signal with a characteristic amplitude and frequency, it may be the amplitude of the oscillating signal at the characteristic frequency that is reduced during the interruption interval. The amplitude of the signal may be reduced to substantially zero during the interruption interval.

Preferably interruption of a signal occurs by way of suppression of the signal during the interruption interval. Preferably, the interferometer is arranged such that in operation a measurement beam is provided by the providing means and the measurement is subsequently interrupted by the interrupting means. In that case, the interrupting means may interrupt the measurement beam by performing an operation on the measurement beam, such as filtering or switching the measurement beam.

Alternatively, the interrupting means may form part of, or affect operation of, the providing means, such that in operation the providing means provides an interrupted measurement beam. In that case, the interrupting means may interrupt the measurement beam by interrupting operation of the providing means.

Preferably, the response beam is a reflection of the measurement beam.

The measurement beam and the response beam are typically beams of electromagnetic radiation. Preferably the measurement beam and the reference beam are beams of light in the visible range of frequencies. The measurement beam and the reference beam provided by the providing means in operation may comprise a series of pulses or may be continuous.

By providing an interrupting means, increased control may be provided over the response beam as well as over the measurement beam as, in general, an interruption in the measurement beam will produce a corresponding interruption in the response beam (for example if the response beam is the reflection of the measurement beam from the object).

In the situation where there is a noise signal or other extraneous signal which occurs at the detector intermittently, the interrupting means may be operated in such a way that at least part of a non-interruption interval of the response beam at the detector coincides with a time when the noise or other extraneous signal is not present at the detector.

Use of the interrupting means is particularly advantageous in the situation where the noise or other extraneous signal comprises a portion of the measurement beam itself, or is derived from the measurement beam, or from operation of the means for providing the measurement beam. In that case, as the timing of the arrival of a noise or other extraneous signal and the timing of the arrival of the response beam are linked and are both dependent upon operation of the measurement means and the interrupting means, appropriate operation of the interrupting means may provide a particularly efficient way of that at least part of a non-interruption interval of the response beam at the detector coincides with a time when the noise or other extraneous signal is not present, or is reduced, at the detector.

The noise or other extraneous signal may comprise a portion of the measurement beam which has passed to the detector without having first been directed to the object, and thus in operation such a portion of the measurement beam may form part of the interference signal at the detector. In that case, the interrupting means may be operable to ensure that a non-interruption interval at the detector of the response beam overlaps at least partially with an interruption interval at the detector of that interfering portion of the measurement beam.

Thus it may be ensured that there is at least one time interval when an uninterrupted part of the response beam and an interrupted part of the measurement beam each form part of the interference signal. The effect of the interfering portion of the measurement beam on a measurement made by the detector may thus be reduced or eliminated.

Preferably the interruption interval at the detector of the response beam coincides with the non-interruption interval at the detector of the interfering portion of the measurement beam. Preferably, the non-interruption interval at the detector of the response beam coincides with the interruption interval at the detector of the portion of the interfering measurement beam.

The interfering portion of the measurement beam may have leaked through a component of the directing means, for instance a beam splitter, and may be referred to as a leakthrough measurement beam.

The means for providing a measurement beam may comprise a laser source, the directing means may comprise an arrangement of optical components, the processing means may comprise a processor, and the interrupting means may comprise control circuitry.

The interrupting means may be configured to interrupt the measurement beam in a periodic cycle. Preferably each interruption interval takes up half of the respective periodic interruption cycle, and each non-interruption interval takes up the other half of the respective periodic interruption cycle.

The interferometer comprises control means for controlling the interruption of the measurement beam in dependence upon the distance to the object. The arrival time of the response beam at the detector usually depends on the distance to the object, and so by controlling the timing of the interruption of the measurement beam in dependence upon the distance to the object an efficient way of controlling the timing of the presence of the response beam at the detector is provided,

The control means is configured to control the period (*T*) of the interruption cycle to be substantially equal to *2*, *T_{w}*/*(1*+*2N)*, where Tₕ is the round-trip time made up of the time taken for the measurement beam to travel from the interferometer to the object added to the time taken for the response beam to travel from the object to the interferometer and *N* is any integer, *N=0, 1,* 2 ... , based on the understanding that the distance travelled by the interfering portion of the measurement beam within the interferometer is negligible compared to the distance between the interferometer and the object. Thus, it may be ensured that the response beam and a portion of the measurement beam which passes to the detector without first passing to the object substantially do not overlap at the detector.

In the case where the distance travelled by the interfering measurement beam is not negligible, the round trip time *Tₕ* may be considered to be the time taken for the measurement beam/response beam to travel over the difference in path length between the path travelled by the measurement beam/response beam to reach the detector and the path travelled by the interfering measurement beam to reach the detector.

Preferably in the context of the period (*T*) of the interruption cycle, the term substantially equal means within 10% of the nominal value. The period *T* may be equal to 2. *Tₕ*/*(1*+*2N).*

Preferably *N*=0 and thus the control means is arranged to control the period (*T*) of the interruption cycle to be substantially equal to double the total *Tₕ* of the time taken for the measurement beam to travel from the interferometer to the object and the time taken for the response beam to travel from the object to the interferometer.

Preferably, the detector is configured to provide a measurement signal representative of the interference signal and the processing means is configured to use the measurement signal in determining the measure of the distance to the object.

Preferably the interferometer further comprises means for maintaining at least one characteristic of the measurement signal during an interruption interval of the response beam at the detector. Preferably the at least one characteristic is a characteristic of the measurement signal pertaining at a time outside an interruption interval of the response beam at the detector. Preferably the maintaining means is arranged to maintain the measurement signal to be substantially the same as the measurement signal obtained at a time outside an interruption interval of the response beam at the detector.

The maintaining means may comprise a phase locked loop arrangement including a voltage controlled oscillator.

The interferometer may further comprise:- a further detector; and means for directing a portion of the measurement beam to the further detector to form a further interference signal, wherein the further detector is configured to provide a reference signal representative of the further interference signal; and the interferometer further comprises further maintaining mains for maintaining at least one characteristic of the reference signal during an interruption interval of the measurement beam at the further detector.

Preferably the at least one characteristic is a characteristic of the reference signal pertaining during a non-interruption interval of the measurement beam at the further detector. Preferably the further maintaining means is arranged to maintain the reference signal to be substantially the same as the reference signal pertaining during a non-interruption interval of the measurement beam at the further detector.

The further maintaining means may comprise a further phase locked loop arrangement including a further voltage controlled oscillator.

Preferably, the interferometer comprises means for providing a reference beam, and means for directing the reference beam to the detector to form part of the interference signal. Preferably, the interferometer further comprises means for directing a portion of the reference beam to the further detector to form part of the further interference signal.

The means for providing a reference beam and the means for providing a measurement beam may be the same, or may have components in common. In particular, the same laser source may be used in both the means for providing a reference beam and the means for providing a measurement beam.

Preferably the processing means is configured to determine the measure of the distance from the difference between the phase of the interference signal and the phase of the further interference signal. Preferably the difference between the phase of the interference signal and the phase of the further interference signal is the difference between the phase of the interference signal pertaining at a non-interruption period of the response beam at the detector and the phase of the further interference signal pertaining at a non-interruption period of the measurement beam at the further detector.

Preferably the processing means is configured to determine the measure of the distance to the object by processing together the measurement signal and the reference signal.

As mentioned above, the measure of the distance determined by the interferometer may be the relative variation in the distance to the object. Alternatively or additionally the measure of the distance may be the absolute distance to the object.

In order to determine the absolute distance to the object, the interferometer may further comprise means for measuring the time of flight of a part of the measurement beam from the interferometer to the object and of the corresponding part of the response beam from the object to the interferometer.

The interrupting mean may be operable to ensure that the measurement beam comprises at least one pulse, and the means for measuring the time of flight may be configured to measure the time of flight of the at least one pulse from the interferometer to the object and of the corresponding at least one response pulse from the object to the interferometer. The absolute distance to the object may then be calculated from the time of flight.

The measured time of flight and/or calculated absolute distance thus obtained may be used by the control means to determine a suitable value of the period (*T*) of the interruption cycle in order to measure a subsequent variation of the distance to the object.

Preferably at least one of the means for providing the measurement beam and the means for providing the reference beam comprises a laser. The measurement beam and the reference beam preferably each comprise a laser signal having a frequency in the range 100 THz to 1000 THz.

The means for providing the measurement beam and the means for providing the reference beam are preferably configured to provide the measurement beam having a first frequency and the reference beam having a second frequency different from the first frequency.

Preferably the frequency of the measurement beam and the frequency of the reference beam differ by between 10 MHz and 100MHz.

The directing means may comprise a beam splitter.

The object may be a satellite. The interferometer may form part of a further object, for instance a further satellite.

Preferably, the response beam comprises a reflection of the measurement beam by the object, and preferably the object includes reflecting means for reflecting the measurement beam.

The distance to the object may be less than or equal to 150 km, preferably less than or equal to 100 km, and more preferably less than or equal to 50km. The distance to the object may be greater than or equal to 100m, preferably greater than or equal to 1km, and more preferably greater than or equal to 10km. Preferably the distance to the object is between 1km and 100km.

In a further, independent aspect of the invention there is provided a method of determining a measure of the distance to an object, comprising:- providing a measurement beam; directing at least a portion of the measurement beam towards the object; receiving a response beam from the object in response to the at least a portion of the measurement beam and passing the response beam to a detector to form part of an interference signal at the detector; and determining a measure of the distance to the object in dependence upon the interference signal at the detector, characterised in that the method further comprises interrupting the measurement beam.

In a further aspect, the invention provides on/off temporal modulation of a measurement laser beam (sent to a distant body), with a temporal modulation period which is a function of the separation of the bodies, in such a way to avoid the simultaneous presence of the return measurement beam and a spurious fraction of the reference beam on an interferometer detector. Thus the interferometer signal is also intermittent. Therefore, in the half of the temporal modulation period in which the measurement beam is not present on the interferometer detector, the information about the relative displacement of the two bodies may be retrieved from a local oscillator which is kept phase locked to the interferometer signal when the measurement beam is present on the detector. A heterodyne interferometer using this temporal modulation scheme is also immune from distortion of the beat signal produced by the polarisation mixings. Utilization of a local oscillator phase locked to the interferometer signal (when it is present) may keep track of the relative displacement of the two bodies if an interferometer signal is not present because of the lack of the return measurement beam at the interferometer detector. The on/off temporal modulation of the measurement laser beam allows also information about the absolute distance between the two bodies to be obtained, from the measurement of the round-trip time of flight of the modulation pulses. That information concerning the absolute distance (besides being an additional output of the metrology system) may be used in turn to adjust the temporal modulation period of the measurement laser beam as a function of the separation of the bodies.

Any feature in one aspect of the invention may be applied to other aspects of the invention, in any appropriate combination. In particular, apparatus features may be applied to method features and *vice versa.*

Embodiments of the invention will now be described, by way of example only, with reference to the accompanying drawings in which:
Figure 1 is a schematic illustration of a known heterodyne interferometer system;
Figure 2a is a schematic illustration of a part of the heterodyne interferometer system of Figure 1, showing schematically the path followed by the measurement and reference beams;
Figure 2b is a graph of amplitude versus frequency, illustrating the relative amplitudes and frequencies of the superpositions of the reference beam r, the reflected beam m, and that part of the measurement beam spuriously transmitted through the polarising beam splitter s.
Figure 3 is a schematic illustration of an interferometer system according to the preferred embodiment;
Figure 4 is a timing diagram illustrating a preferred mode of operation of the interferometer system of Figure 3.

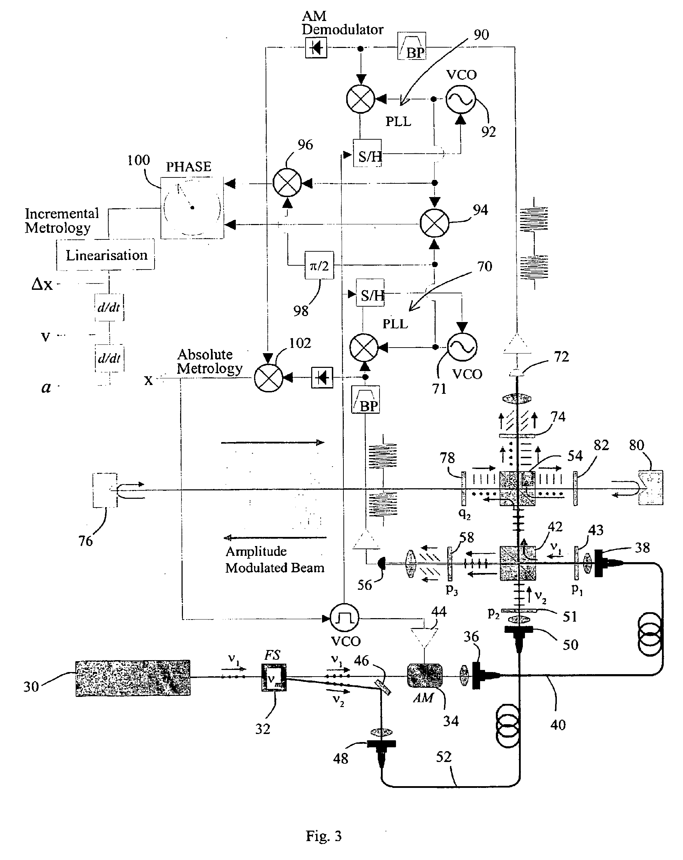

A heterodyne interferometer system according to the preferred embodiment is shown in Figure 3. All of the components of the system are located on a first satellite, with the exception of a retro-reflector which is located on a second satellite as described in more detail below. The system is operable to measure the relative displacement of the second satellite from the first satellite. The system includes a laser source 30 aligned with a frequency shifter 32, an amplitude modulation device 34 and coupling optics 36. The coupling optics 36 are connected to collimating optics 38 via polarisation-maintaining optical fibre 40. The output of the collimating optics 38 is aligned with a polarising beam splitter 42 via a linear polariser 43.

A control and processing device (not shown) is connected to the amplitude modulation device 34 via amplifier 44, and is configured to control operation of the amplitude modulation device 34.

The frequency shifter 32 is also aligned with a mirror 46 arranged to direct a part of the laser beam originating at the laser source 30 to coupling optics 48. The coupling optics 48 are connected to collimating optics 50 via a polarisation-maintaining optical fibre 52. The output of the collimating optics 50 are also aligned with the above-mentioned polarising beam splitter 42, via a linear polariser 51, in a direction orthogonal to the alignment of collimating optics 38.

The polarising beam splitter 42 is arranged so that radiation entering from the collimating optics 38 or from the collimating optics 50 is directed, in dependence upon its polarisation, either to a further polarising beam splitter 54, or to a reference detector 56 via a linear polariser 58.

An output of the reference detector 56 is connected, via a bandpass filter, to the control and processing device (not shown) and also to an input of phase locked loop circuitry 70, which includes a voltage controlled oscillator 71.

The further polarising beam splitter 54 is arranged so that radiation arriving from the polarising beam splitter 42 is directed, in dependence upon its polarisation, either to a detector 72 via a linear polariser 74 or to a retro-reflector 76 located on the second satellite via a quarter-wave plate 78.

The further polarising beam splitter 54 is also arranged so that radiation reflected back from the retro-reflector 76 via the quarter-wave plate 78 passes through the further polarising beam splitter 54 to a further retro-reflector 80 via a further quarter-wave plate 82. In turn, the radiation reflected back from that further retro-reflector 80 to the further polarising beam splitter 54 is directed by the further polarising beam splitter 54 to the detector 72 via the linear polariser 74.

An output of the detector 72 is connected via a bandpass filter to the control and processing device (not shown) and is also to an input of further phase locked loop circuitry 90, which includes a voltage controlled oscillator 92.

The output of the phase locked loop circuitry 70 and the output of the further phase locked loop circuitry 90 are both connected to a two-phase detector 94.

The output of the phase locked loop circuitry 70 and the output of the further phase locked loop circuitry are also both connected to a further two-phase detector 96. The output of the phase locked loop circuitry is connected to the further two-phase detector 96 via a phase shifter 98 which is arranged to introduce a phase delay of 90°.

The output of the two-phase detector 94 and the output of the further two-phase detector 96 are each connected to a respective input of a phase comparator 100. The output of the phase comparator 100 is connected to the control and processing device (not shown). The control and processing device is configured to carry out a linearisation procedure to linearise the output of the phase comparator 100. The linearised output is used by the control and processing device to determine the relative displacement of the first and second satellites. The control and processing device is also configured to perform differentiation procedures to determine the relative velocity and relative acceleration of the first and second satellites.

The heterodyne interferometer is configured to measure the relative variation in distance between the retro-reflectors 76 80 (placed on the first and second satellites respectively, or on any two distinct bodies in general in variants of the preferred embodiment) and also to measure the absolute distance between the retro-reflectors 76 80. The preferred mode of operation of the interferometer is now described.

In operation, the laser source 30 emits a beam with frequency ν₁ and with a linear polarisation status (in this case a vertical polarisation). The frequency shifter 32 operates on the beam received from the laser source 30 to produce both a zero-order beam with unchanged frequency and a diffracted beam with frequency ν₂ = ν₁ ± ν*ₘ*.

It should be noted that, for clarity, in Figure 3 the relative polarisations of the laser radiation at various points in the system is indicated by the symbols • • • (indicating vertical polarisation), | | | (indicating horizontal polarisation) or /// (indicating a polarisation at 45°, between horizontal and vertical), and that the direction of the radiation is indicated at various points by arrows. For example, it can be seen that the vertical polarisation of the beam emitted by the laser source 30 is indicated by the symbol • • • at the output to the laser source 30, and that the beam is passing towards the frequency shifter 32.

The zero order beam emitted by the frequency shifter 32 is the measurement beam. The diffracted beam emitted by the frequency shifter 32 with frequency ν₂ = ν₁ ± ν*ₘ* is the reference beam.

The two linearly polarised beams (the measurement beam and the reference beam) are separately brought to the interferometer optical system (constituted by the polarising beam-splitters 42 54, the linear polarisers 43 51 58 74, and the quarter-wave plates 78 82) by means of the two polarisation maintaining fibres 40 52, endowed at each end with coupling optics 36 48 or collimating optics 38 50.

Considering the path of the measurement beam to the interferometer optical system in more detail, the measurement beam is routed to the polarising beam splitter 42 of the interferometer optical system via the amplitude modulation device 34, the coupling optics 36, the collimating optics 38, the polarisation maintaining optical fibre 40, and the linear polariser 43.

The operation of the amplitude modulation device 34, which is located between the laser source 30 and the interferometer optical system as described above, enables the periodic interruption of the measurement beam. The amplitude modulation device 34 is constituted by an electro-optic voltage-variable waveplate which, in operation, rotates through 90° the polarisation (from vertical to horizontal) of the measurement beam under a given applied voltage. The given applied voltage is applied periodically to the amplitude modulation device 34 under the control of the control and processing means, so that the polarisation of the measurement beam leaving the amplitude modulator 34 alternates periodically between a horizontal polarisation and a vertical polarisation. Upon the measurement beam reaching the linear polariser 43, those portions of the measurement beam with a horizontal polarisation introduced by the amplitude modulation device 34 cannot pass through, whereas those portions of the measurement beam with a vertical polarisation, unchanged by the amplitude modulation device, are allowed to pass through. Thus, upon exiting the linear polariser 43, the measurement beam is temporally modulated in an on-off fashion, with the measurement beam being substantially zero during the interruption times.

Considering the path of reference beam to the interferometer optical system in more detail, the reference beam is routed to the polarising beam splitter 42 the interferometer optical system via the coupling optics 48, the polarisation maintaining optical fibre 52, the collimator 50, and the linear polariser 51. The polarisation maintaining optical fibre 52 carrying the reference beam is twisted by 90° so that the reference beam arrives at the polarising beam splitter 42 with a horizontal linear polarisation (indicated by the symbol | | | in Figure 3).

Due to its horizontal linear polarisation, the reference beam passes straight through the polarising beam splitter 42 and then straight through the further polarising beam splitter 54 and follows a straight path to the detector 72. However, a portion of the reference beam leaks through the polarising beam splitter 42 and passes to the reference detector 56 rather than to the detector 72.

Returning to consideration of the measurement beam, the major portion of the measurement beam is directed by the polarising beam splitter 42 to the further polarising beam splitter 54. A portion of the measurement beam also leaks through the polarising beam splitter 42 and passes to the reference detector 56 rather than being directed to the further polarising beam splitter 54.

The major portion of the measurement beam arriving at the further polarising beam splitter 54 from the polarising beam splitter 42 is directed by the further polarising beam splitter 54 to the retro-reflector 76 located on the second satellite and is reflected back as a response beam. The response beam passes back to the further polarising beam splitter 54 located on the first satellite and passes through the further polarising beam splitter 54 to the retro-reflector 80 forming part of the interferometer optical system on the first satellite. The response beam is then reflected back by the retro-reflector 80 to the further polarising beam splitter 54, and then passes to the detector 72.

A portion of the measurement beam arriving at the further polarising beam splitter 54 from the polarising beam splitter 42 leaks through the further polarising beam splitter 54 and passes directly to the detector 72, without being directed to the second satellite and passing via the retro-reflectors 76 80. That portion of the measurement beam may be referred to as the leakthrough measurement beam.

From the preceding description concerning the paths taken by the measurement beam, the reference beam, and the response beam it is clear that the signal received at the reference detector 56 comprises a superposition of a portion of the measurement beam with a portion of the reference beam, and that the signal received at the detector 72 comprises a superposition of a portion of the reference beam with the response beam together with the leakthrough measurement beam (that portion of the measurement beam which leaks through the further polarising beam splitter 54 and passes directly to the detector 72).

It is also clear that due to the temporal modulation imposed on the measurement beam (and consequently also imposed on the reflected response beam) and due to the different path lengths of the paths taken by that part of the measurement beam which passes to the retro-reflector and is reflected as the response beam, and the leakthrough measurement beam, the particular combination of signals which are superimposed at the detector 72 varies with time. It is also the case that the particular combination of signals which are superimposed at the detector 72 at any point in time can be controlled by selection of an appropriate period for the interruption of the measurement beam, taking into account the separation of the retro-reflectors 76 80 on the first and second satellites.

It is a feature of the preferred embodiment that the period for the interruption of the measurement beam is selected such as to avoid the simultaneous presence at the detector 72 of the response beam (the weak back-reflected measurement beam) and the larger leakthrough measurement beam. Thus, the on-off period (*T*) of the temporal modulation of the measurement laser beam is set equal to twice the round-trip time (*Th*) between the retro-reflectors 76 80 (*T* = *2·Th*). More generally, in variants of the preferred embodiment the on-off *T* period is set to be substantially equal to *2.Tₕ*/*(1*+*2N)* for any *N*=*0*, *1, 2* ...

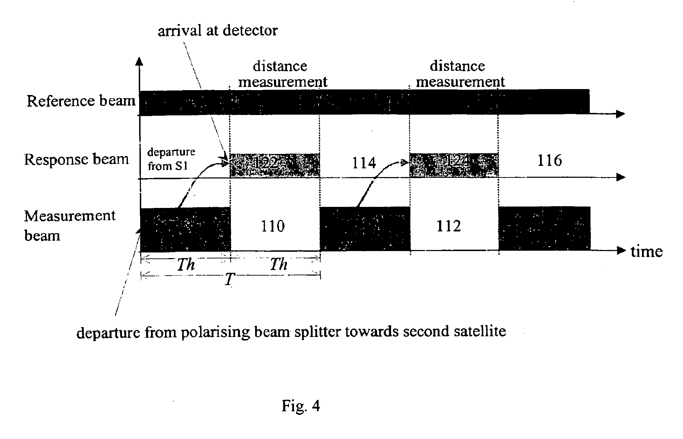

The amplitude of the reference beam received at the detector 72, the amplitude of the measurement beam at the output of the further polarising beam splitter 54 upon leaving the first satellite and being directed towards the second satellite, and the amplitude of the response beam received at the detector 72 are shown in Figure 4 as a function of time.

The curved arrows in Figure 4 are used to indicate that the portions of the measurement beam at the output of the further polarising beam splitter 54 at the non-interruption intervals shown 118 120 correspond to the portions of the response beam arising from reflection of those portions of the measurement beam and arriving at the detector 72 at non-interruption intervals 122 124 at times Tₕ later. The time Tₕ is the round-trip time for the measurement beam/response beam to travel between the retro-reflectors 76 80. It should be noted that the amplitudes shown in Figure 4 are not to scale, and in fact the amplitudes of the portions of the response beam at the non-interruption intervals 122 124 shown would be a far smaller fraction of the amplitudes of the corresponding portions of the measurement beam than indicated in Figure 4.

The distance from the output of the further polarising beam splitter 54 to the detector 72 (and to the further detector 56) is small compared to the distance from the first satellite to the second satellite. Thus, if the amplitude of the leakthrough measurement beam present at the detector 72 (or the amplitude of the portion of the measurement beam present at the further detector 56) were also to be plotted in Figure 4 it would have the same form and variation with time, but lower amplitude, as the measurement beam at the output of the further polarising beam splitter 54 at the intervals shown 110 112 118 120. Thus it is clear from Figure 4 that the non-interruption intervals 122 124 of the response beam at the detector 72 coincide with the interruption intervals of the leakthrough measurement beam 110 112 at the detector 72.

The interruption intervals 110 112 of the measurement beam at the output of the further polarising beam splitter 54 correspond to the interruption intervals 114 116 of the response beam at the detector 72 occurring at times Tₕ later. During the interruption intervals 114 116 of the response beam at the detector 72 the amplitude of the response beam at the detector 72 is substantially zero. During those intervals 114 116 the interference signal at the detector 72 is made up primarily of the leakthrough measurement beam and the reference beam. Similarly, during the interruption intervals 110 112 of the measurement beam at the detector 72, the amplitude of the measurement beam at the detector 72 is substantially zero, and the interference signal at the detector 72 is made up primarily of the response beam and the reference beam.

The relative displacement of the first and second satellites is determined based upon the signals received at the detector 72 during the interruption intervals 110 112 of the leakthrough measurement beam at the detector 72 (which coincide with the non-interruption intervals 122 124 at the detector 72), in comparison with the signals received at the further detector 56 during the non-interruption intervals 118 120 of the measurement beam at the further detector 56. Thus, effects arising from the leakthrough of the measurement beam can be avoided in the determination of the relative displacements of the satellites.

As described in more detail below, in the preferred embodiment the measurement signal from the detector 72 is maintained to have the same form and amplitude during each interruption interval of the response beam at the detector 72, for instance interval 114, as the form and amplitude of the measurement signal obtained during the immediately preceding time interval, for instance interval 110, which is a non-interruption interval of the response beam at the detector 72. Similarly, the reference signal from the further detector 56 is maintained to have the same form and amplitude during each interruption interval of the measurement beam at the further detector 56 as the form and amplitude of the reference signal obtained during the immediately preceding time interval, which is a non-interruption interval of the measurement beam at the further detector 56. Thus, the relative displacements of the satellites can be determined accurately even during interruption intervals of the response beam at the detector 72.

The reference beam is not subject to any periodic interruption and, consequently, it can be seen that the amplitude of the reference beam received at the detector 72 does not vary with time.

The operation of the processing and detection circuitry is now described further.

The two detectors 56 72 transform the received optical interference signals into electronic oscillating output signals, which are the reference signal and measurement signal respectively. The oscillating signal of the reference detector 56, referred to as the reference signal, has frequency |ν₂ - ν₁| = |*νₘ*|, and the oscillating signal for the detector 72, referred to as the measurement signal has frequency |ν₂ - ν₁ ± ν_{D}| = |*νₘ* ± ν_{D}|, where ν_{D} is the Doppler frequency shift due to the satellite relative motion. A narrow band circuit amplifies the signals.

Due to the periodic interruption of the measurement beam (and the periodic interruption of the response beam) there is a corresponding periodic variation of the measurement signal output from the detector 72 and the reference signal output from the reference detector 56. In order to measure relative displacement, a phase comparison of the useful portions of the reference and measurement signals must be carried out. However, the useful portion of the reference signal is obtained during one half of the cycle 114 116, whereas the useful portion of the measurement signal is obtained during the other half of the cycle 122 124. Therefore the relative displacement cannot be obtained by way of a direct comparison of the measurement signal output from the detector 72 at one point in the cycle and the reference signal output from the reference detector 56 at the same point in the cycle.

However, sample and hold operations are performed by the phase locked loop circuitry to ensure that the output of the VCO 92 is representative of the useful portion of the measurement signal throughout the whole of the cycle, and that the output of the further VCO 71 is representative of the useful portion of the reference signal throughout the whole of the cycle, and thus that the relative displacement can be obtained by performing the phase comparison using the outputs from the VCOs 71 92 at any point in the cycle.

The structure and operation of the phase locked loop (PLL) circuitry are now considered in more detail.

The voltage controlled oscillator (VCO) 92 is phase locked (using the PLL circuitry) to the output signal coming from the detector 72 during the half of the cycle in which the amplitude modulated response beam is present on the detector 72. A further voltage controlled oscillator (VCO) 71 is phase locked (using PLL circuitry) to the reference detector 56 during the other half of the cycle, in which the amplitude modulated measurement beam is present on the reference detector 56.

During the half of the cycle 122 in which the amplitude modulated response beam is present on the detector 72, the output of the VCO 92 is representative of the output from the detector 72 during that half of the cycle 122. During the next half of the cycle 114, in which the amplitude modulated response beam is not present on the detector 72, the PLL circuitry forces the VCO 92 to oscillate at a constant frequency and phase, representative of the frequency and phase of the output from the detector 72 during the preceding half of the cycle 122 when the amplitude modulated response beam was present. Thus, the PLL circuitry performs a sample and hold operation, in which the output of the detector 72 is sampled during one half of the cycle 122 and held during the following half of the cycle 114.

Similarly, during the half of the cycle 114 in which the amplitude modulated measurement beam is present on the reference detector 56, the output of the further VCO 71 is representative of the output from the reference detector 56 during that half of the cycle 114. During the next half of the cycle 124, in which the amplitude modulated measurement beam is not present on the reference detector 56, the PLL circuitry forces the further VCO 71 to oscillate at a constant frequency and phase, representative of the frequency and phase of the output from the reference detector 56 during the preceding half of the cycle 114 when the amplitude modulated measurement beam was present on the further detector 56. Thus, the PLL circuitry performs a sample and hold operation, in which the output of the reference detector 56 is sampled during one half of the cycle 114 and held during the following half of the cycle 124.

A phase shifter 98 introduces a phase delay of π/2 on one of the two VCO signals. Two-phase detectors (mixers) 94 96 generate two quadrature signals that are the two orthogonal coordinates of the rotating phase vector (this being the phase difference between the interferometer arms), which are passed to the phase detector 100. The accumulated phase difference multiplied by the laser wavelength gives the relative distance variation between the retro-reflectors 76 80.

The relative distance variation measurement scheme of the preferred embodiment described above works most effectively in the presence of an amplitude modulation of the measurement laser beam if the maximum phase change occurring in the period when the response beam is off (two times the round-trip time) is less than π/2 (i.e. 1/4 of the laser wavelength λ). In fact, during the time when the response beam is off, the VCO oscillates at a constant frequency, which is the modulation frequency ν*ₘ* corrected by the Doppler effect due to the relative velocity of the objects (satellites). This imposes a limit to the maximum speed changes in time, i.e. on the maximum relative acceleration Δ *a* of the two satellites, as being Δ*a* < λ/2/*T*², with *T* being the on-off period of the temporal modulation of the measurement laser beam for the system to function most effectively. In a variant of the preferred embodiment, the control and processing means is configured to calculate and to monitor the relative acceleration of the two satellites and to output a warning signal if the relative acceleration of the two satellites approaches the limit of λ/2/*T*².

In the preferred embodiment described above the interferometer is used primarily to measure the distance variation between satellites (it is used primarily as an incremental metrology system). The same interferometer can also be used to measure the absolute distance between satellites (it can be used as an absolute metrology system).

In order to measure the absolute distance, the control and processing device (not shown) is configured to determine the time of flight of a portion of the measurement beam from the interferometer to the retroreflector 76 and the corresponding portion of the response beam reflected back from the retroreflector 76 to the interferometer.

As described above, the amplitude modulation device 34 in the preferred embodiment operates to interrupt the measurement beam periodically. That changes the measurement beam from being continuous to being pulsed in a periodic on/off cycle. The distance between the satellites can be obtained by measuring, for each pulse in the cycle, the difference between the time of arrival of the measurement pulse at the reference detector 56 and the time of arrival of the corresponding reflected response pulse at the detector 72.

It can be seen in Figure 3 that the output of each of the detector 72 and the reference detector 56 are connected to a mixer 102. The output of the mixer is connected to the control and processing device (not shown). The control and processing device, includes an absolute metrology module which is configured to process the output of the mixer 102 in order to determine, from the mixed output signals from the reference detector 56 and the detector 72, the difference between the time of arrival of the measurement pulse at the reference detector 56 and the time of arrival of the corresponding reflected response pulse at the detector 72, to give the time of flight of each pulse from the first satellite to the second satellite and back, and thus to determine the absolute distance between the first satellite and the second satellite based upon the known speed of propagation of the pulses.

The control and processing means is also configured to vary the period of the interruption cycle, by controlling the amplitude modulation device 34, in dependence upon the time of flight of each pulse, representative of the absolute distance between the satellites, which has been determined by the absolute metrology module. In particular the control and processing means is configured to set the on-off period (*T*) to be equal to twice the round-trip time (or, more generally, to be substantially equal to *2.Tₕ*/*(1*+*2N)* for any *N=0, 1, 2* ... ∞, based upon the round trip time determined by the absolute metrology module. In variants of the preferred embodiment the absolute distance is measured or estimated using alternative methods, and the interferometer is used only to measure the relative variation of the distance.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. An interferometer for determining a measure of the distance to an object, comprising:
- means (30) for providing a measurement beam;
- means (40, 42, 54) for directing at least a portion of the measurement beam towards the object;
- a receiver (54) for receiving a response beam from the object in response to the at least a portion of the measurement beam and for passing the response beam to a detector (72) to form part of an interference signal at the detector (72); and
- processing means for determining a measure of the distance to the object in dependence upon the interference signal,
**characterized in that** the interferometer further comprises means (34) for interrupting the measurement beam in a periodic cycle and control means for controlling the period (T) of the interruption cycle to be substantially equal to 2.Tₕ/(1+2N), where Tₕ is the round-trip time to the object and N is an integer.

2. An interferometer according to claim 1, wherein N=0 and thus the control means is arranged to control the period (T) of the interruption cycle to be substantially equal to double Tₕ.

3. An interferometer according to any preceding claim, wherein the detector is configured to provide a measurement signal representative of the interference signal and the processing means is configured to use the measurement signal in determining the measure of the distance to the object, and the interferometer further comprises means for maintaining at least one characteristic of the measurement signal during an interruption interval of the response beam at the detector.

4. An interferometer according to claim 3, further comprising a further detector and means for directing a portion of the measurement beam to the further detector to form a further interference signal, and wherein:
- the further detector is configured to provide a reference signal representative of the further interference signal, and
- the interferometer further comprises further maintaining means for maintaining at least one characteristic of the reference signal during an interruption interval of the measurement beam at the further detector.

5. An interferometer according to any preceding claim, further comprising means for measuring the time of flight of a part of the measurement beam from the interferometer to the object and of the corresponding part of the response beam from the object to the interferometer.

6. An interferometer according to claim 5, wherein the interrupting mean is operable to ensure that the measurement beam comprises at least one pulse, and the means for measuring the time of flight is configured to measure the time of flight of the at least one pulse from the interferometer to the object and of the corresponding at least one response pulse from the object to the interferometer.

7. An interferometer according to any preceding claim, wherein at least one of the means for providing the measurement beam and the means for providing the reference beam comprises a laser.

8. An interferometer according to any preceding claim, wherein the measurement beam and the reference beam each comprise a laser signal having a frequency in the range 100 THz to 1000 THz.

9. An interferometer according to any preceding claim, wherein the response beam comprises a reflection of the measurement beam by the object, and preferably the object includes reflecting means for reflecting the measurement beam.

10. An interferometer according to any preceding claim. wherein the interferometer forms part of a satellite, and the object is a further satellite.

11. A method of determining a measure of the distance to an object, comprising:
- providing a measurement beam;
- directing at least a portion of the measurement beam towards the object;
- receiving a response beam from the object in response to the at least a portion of the measurement beam and passing the response beam to a detector (72) to form part of an interference signal at the detector (72); and
- determining a measure of the distance to the object in dependence upon the interference signal at the detector,
**characterized in that** the method further comprises interrupting the measurement beam in a periodic cycle and controlling the period (T) of the interruption cycle to be substantially equal to 2.Tₕ/(1+2N), where Tₕ is the round-trip time to the object and N is an integer.

## Patentansprüche

1. Interferometer für das Ermitteln eines Maßes der Entfernung zu einem Objekt, das aufweist:
- ein Mittel (30) für das Liefern eines Messstrahles;
- ein Mittel (40, 42, 54) für das Lenken von mindestens einem Teil des Messstrahles in Richtung des Objektes;
- einen Empfänger (54) für das Empfangen eines Reaktionsstrahles vom Objekt als Reaktion auf den mindestens einen Teil des Messstrahles und für das Führen des Reaktionsstrahles zu einem Detektor (72), um einen Teil eines Interferenzsignals im Detektor (72) zu bilden; und
- ein Verarbeitungsmittel für das Ermitteln eines Maßes der Entfernung zum Objekt in Abhängigkeit vom Interferenzsignal,
**dadurch gekennzeichnet, dass** das Interferometer außerdem ein Mittel (34) für das Unterbrechen des Messstrahles in einem periodischen Zyklus und ein Steuermittel für das Steuern der Periode (T) des Unterbrechungszyklus aufweist, damit sie im Wesentlichen gleich 2.Tₕ/(1+2N) ist, wobei Tₕ die Hin- und Rücklaufzeit zum Objekt und N eine ganze Zahl ist.

2. Interferometer nach Anspruch 1, bei dem N = 0 und daher das Steuermittel angeordnet ist, um die Periode (T) des Unterbrechungszyklus so zu steuern, dass sie im Wesentlichen gleich dem doppelten Tₕ ist.

3. Interferometer nach einem der vorhergehenden Ansprüche, bei dem der Detektor ausgebildet ist, um ein Messsignal zu liefern, das für das Interferenzsignal repräsentativ ist, und bei dem das Verarbeitungsmittel ausgebildet ist, um das Messsignal beim Ermitteln des Maßes der Entfernung zum Objekt zu verwenden, und wobei das Interferometer außerdem ein Mittel für das Aufrechterhalten von mindestens einem charakteristischen Merkmal des Messsignals während des Unterbrechungsintervalls des Reaktionsstrahles im Detektor aufweist.

4. Interferometer nach Anspruch 3, das außerdem einen weiteren Detektor und ein Mittel für das Lenken eines Teils des Messstrahles zum weiteren Detektor aufweist, um ein weiteres Interferenzsignal zu bilden, und bei dem:
- der weitere Detektor ausgebildet ist, um ein Bezugssignal zu liefern, das für das weitere Interferenzsignal repräsentativ ist; und
- das Interferometer außerdem ein weiteres Mittel für das Aufrechterhalten von mindestens einem charakteristischen Merkmal des Bezugssignals während eines Unterbrechungsintervalls des Messstrahles im weiteren Detektor aufweist.

5. Interferometer nach einem der vorhergehenden Ansprüche, das außerdem ein Mittel für das Messen der Flugzeit eines Teils des Messstrahles vom Interferometer zum Objekt und des entsprechenden Teils des Reaktionsstrahles vom Objekt zum Interferometer aufweist.

6. Interferometer nach Anspruch 5, bei dem das Unterbrechungsmittel funktionsfähig ist, um zu sichern, dass der Messstrahl mindestens einen Impuls aufweist, und bei dem das Mittel für das Messen der Flugzeit ausgebildet ist, um die Flugzeit des mindestens einen Impulses vom Interferometer zum Objekt und des entsprechenden mindestens einen Reaktionsimpulses vom Objekt zum Interferometer zu messen.

7. Interferometer nach einem der vorhergehenden Ansprüche, bei dem mindestens eines des Mittels für das Liefern des Messstrahles und des Mittels für das Liefern des Bezugsstrahles einen Laser aufweist.

8. Interferometer nach einem der vorhergehenden Ansprüche, bei dem der Messstrahl und der Bezugsstrahl jeweils ein Lasersignal mit einer Frequenz im Bereich von 100 THz bis 1000 THz aufweist.

9. Interferometer nach einem der vorhergehenden Ansprüche, bei dem der Reaktionsstrahl eine Reflexion des Messstrahles durch das Objekt aufweist, und bei dem vorzugsweise das Objekt ein Reflexionsmittel für das Reflektieren des Messstrahles umfasst.

10. Interferometer nach einem der vorhergehenden Ansprüche, bei dem das Interferometer einen Teil eines Satelliten bildet und das Objekt ein weiterer Satellit ist.

11. Verfahren zum Ermitteln eines Maßes der Entfernung zu einem Objekt, das die folgenden Schritte aufweist:
- Liefern eines Messstrahles;
- Lenken von mindestens einem Teil des Messstrahles zum Objekt;
- Empfangen eines Reaktionsstrahles vom Objekt als Reaktion auf den mindestens einen Teil des Messstrahles und Führen des Reaktionsstrahles zu einem Detektor (72), um einen Teil eines Interferenzsignals im Detektor (72) zu bilden; und
- Ermitteln eines Maßes der Entfernung zum Objekt in Abhängigkeit vom Interferenzsignal im Detektor,
**dadurch gekennzeichnet, dass** das Verfahren außerdem die Schritte des Unterbrechens des Messstrahles in einem periodischen Zyklus und des Steuerns der Periode (T) des Unterbrechungszyklus aufweist, damit sie im Wesentlichen gleich 2.Tₕ/(1+2N) ist, wobei Tₕ die Hin- und Rücklaufzeit zum Objekt und N eine ganze Zahl ist.

## Revendications

1. Interféromètre pour déterminer une mesure de la distance par rapport à un objet, comprenant :
- un moyen (30) pour fournir un faisceau de mesure ;
- un moyen (40, 42, 54) pour diriger au moins une partie du faisceau de mesure vers l'objet ;
- un récepteur (54), pour recevoir un faisceau de réponse de l'objet en réponse à la au moins une partie du faisceau de mesure et pour transmettre le faisceau de réponse à un détecteur (72), pour former une partie d'un signal d'interférence au niveau du détecteur (72) ; et
- un moyen de traitement, pour déterminer une mesure de la distance par rapport à l'objet en fonction du signal d'interférence ;
**caractérisé en ce que** l'interféromètre comprend en outre un moyen (34) pour interrompre le faisceau de mesure dans le cadre d'un cycle périodique, et un moyen de commande pour contrôler la période (T) du cycle d'interruption, de sorte qu'elle soit pratiquement égale à 2.Tₕ/(1+2N), où Tₕ est le temps de propagation aller-retour vers l'objet et N est un nombre entier.

2. Interféromètre selon la revendication 1, dans lequel N = O, le moyen de commande étant ainsi destiné à contrôler la période (T) du cycle d'interruption de sorte qu'elle soit pratiquement égale au double de Tₕ.

3. Interféromètre selon l'une quelconque des revendications précédentes, dans lequel le détecteur est destiné à fournir un signal de mesure représentatif du signal d'interférence, le moyen de traitement étant destiné à utiliser le signal de mesure lors de la détermination de la mesure de la distance par rapport à l'objet, l'interféromètre comprenant en outre un moyen pour maintenir au moins une caractéristique du signal de mesure au cours d'un intervalle d'interruption du faisceau de réponse au niveau du détecteur.

4. Interféromètre selon la revendication 3, comprenant en outre un détecteur additionnel et un moyen pour diriger une partie du faisceau de mesure vers le détecteur additionnel pour former un signal d'interférence additionnel ; et dans lequel :
- le détecteur additionnel est destiné à fournir un signal de référence représentatif du signal d'interférence additionnel ; et
- l'interféromètre comprend en outre un moyen de maintien, pour maintenir au moins une caractéristique du signal de référence au cours d'un intervalle d'interruption du faisceau de mesure au niveau du détecteur additionnel.

5. Interféromètre selon l'une quelconque des revendications précédentes, comprenant en outre un moyen pour mesurer le temps de parcours d'une partie du faisceau de mesure, de l'interféromètre vers l'objet, et de la partie correspondante du faisceau de réponse de l'objet vers l'interféromètre.

6. Interféromètre selon la revendication 5, dans lequel le moyen d'interruption sert à assurer que le faisceau de mesure comprend au moins une impulsion, le moyen de mesure du temps de parcours étant destiné à mesurer le temps de parcours de la au moins une impulsion de l'interféromètre vers l'objet et de la au moins une impulsion de réponse correspondante de l'objet vers l'interféromètre.

7. Interféromètre selon l'une quelconque des revendications précédentes, dans lequel au moins un moyen, le moyen destiné à fournir le faisceau de mesure ou le moyen destiné à fournir le faisceau de référence, comprend un laser.

8. Interféromètre selon l'une quelconque des revendications précédentes, dans lequel le faisceau de mesure et le faisceau de référence comprennent chacun un signal laser ayant une fréquence comprise dans l'intervalle allant de 100 THz à 1000 THz.

9. Interféromètre selon l'une quelconque des revendications précédentes, dans lequel le faisceau de réponse comprend une réflexion du faisceau de mesure par l'objet, l'objet englobant de préférence un moyen de réflexion pour réfléchir le faisceau de mesure.

10. Interféromètre selon l'une quelconque des revendications précédentes, dans lequel l'interféromètre fait partie d'un satellite, l'objet étant un satellite additionnel.

11. Procédé de détermination d'une mesure de la distance par rapport à un objet, comprenant les étapes ci-dessous :
- fourniture d'un faisceau de mesure ;
- direction d'au moins une partie du faisceau de mesure vers l'objet ;
- réception d'un faisceau de réponse de l'objet en réponse à la au moins une partie du faisceau de mesure et transmission du faisceau de réponse vers un détecteur (72), pour former une partie du signal d'interférence au niveau du détecteur (72) ; et
- détermination d'une mesure de la distance par rapport à l'objet en fonction du signal d'interférence au niveau du détecteur ;
**caractérisé en ce que** le procédé comprend en outre les étapes d'interruption du faisceau de mesure dans le cadre d'un cycle périodique, et de contrôle de la période (T) du cycle d'interruption, pour qu'elle soit pratiquement égale à 2.Tₕ/(1+2N), où Tₕ représente le temps de propagation aller-retour vers l'objet et N est un nombre entier.
